# EUROPEAN PATENT SPECIFICATION

(11) **EP 1 518 661 B1**
(45) Date of publication and mention of the grant of the patent: **13.11.2013**
(21) Application number: 04021733.3
(22) Date of filing: 13.09.2004
(51) Int. Cl.: B29C 55/06, B29C 59/16, B41M 3/10

(54) **Watermarked polymeric sheet and method of making the same**
Wassergezeichnete Kunststofffolie und Verfahren zu ihrer Herstellung
Feuille en plastique comportant une filigrane et procédé pour la fabriquer

(30) Priority: 18.09.2003 GB 0321822
(43) Date of publication of application: 30.03.2005
(73) Proprietor: ARJOBEX LIMITED, Clacton-on-Sea, Essex CO15 4NS (GB)
(72) Inventor: Cooper, Jonathan James, Colchester, Essex, C07 6ES (GB)
(74) Representative: Raynor, Simon Mark

(56) References cited:
- EP-A- 0 655 316
- DATABASE WPI Section Ch, Week 198246 Derwent Publications Ltd., London, GB; Class A32, AN 1982-98986E XP002321382 -& JP 49 089773 A (OJI YUKA GOSEISHI KK) 27 August 1974 (1974-08-27)
- PATENT ABSTRACTS OF JAPAN vol. 009, no. 046 (M-360), 27 February 1985 (1985-02-27) & JP 59 185633 A (DAINIPPON INK KAGAKU KOGYO KK), 22 October 1984 (1984-10-22)

## Description

The present invention relates to a watermarked polymeric sheet and a method of making the same. In particular, but not exclusively, the invention relates to a watermarked synthetic paper and a method of making a watermarked synthetic paper.

In this specification, the term "watermark" means a mark formed from areas of increased and/or decreased translucency that is visible by transmitted light and resembles a conventional watermark in a sheet of cellulose-based paper. The terms "watermarked" and "watermarking" should be construed accordingly.

The term "synthetic paper" is used herein and throughout the specification to mean plastics film and sheet products having a feel and printability similar to cellulose paper. It has been recognised that plastics sheet of these types can provide an improved alternative to paper where durability and toughness are required. Plastics sheets produced from polyolefins have several advantages over other plastics since they offer UV resistance, good tear strength and the ability to be recycled in many post-consumer waste applications.

Synthetic papers have been produced commercially by the plastics industry for many years and have taken a number of different forms. They have included products having voided (i.e. multicellular) or unvoided structures, some of which have been coated with filler- and/or pigment-containing surface coatings to improve printing qualities. The voiding technique has frequently been used to reduce the density of the synthetic paper produced. A voiding agent such as zinc-calcium resinate is generally used, which causes voiding when a heated sheet of synthetic paper is stretched. This technique produces a very serviceable sheet that has gained widespread commercial acceptance.

Watermarking may be useful as a security feature, to make copying more difficult and so prevent forgery. This may be valuable for items such as banknotes, cheques, share certificates and identity cards, and labels for high value products such as wine, perfume and pharmaceuticals. Watermarking may also be useful for decorative purposes.

A process for making a watermarked synthetic paper product is described in EP 0655316. In that process, a synthetic paper product is made in a conventional manner by extruding a film of high density polyethylene and then stretching the film in the machine direction and the transverse direction to produce biaxial orientation of the polymer molecules. Prior to stretching, the film is passed between a pair of rollers, one of which has a patterned surface in relief or of hollows, to produce an impression on the surface of the film. This produces a corresponding pattern of light and dark areas in the film after stretching, which can be seen by transmitted light. It has been shown that the dark areas, which correspond to the in relief portions of the roller, are caused by an increase in substance in those areas, and vice versa for the light areas of the film.

Although the process described in EP 0655316 may be used to make a watermarked product, we have found that the watermark is rather indistinct and not well defined. The pattern also generally has a short repeat length, depending on the circumference of the patterned roller, and it must therefore be relatively simple. If a different watermark or pattern is required, the roller must be changed, which is a complex and time-consuming process. Another disadvantage is that the watermark cannot include variable information or data, such as an identification code, date or serial number.

JP-A-49089773 describes a synthetic resin sheet that is drawn after being subjected to localised heat differences, to produce a synthetic paper watermark effect.

It is an object of the present invention to provide a watermarked polymeric sheet and a method of making a watermarked polymeric sheet, that mitigates at least some of the aforesaid disadvantages.

According to the present invention there is provided a method of making a watermarked polymeric sheet, the method including forming a web of a polymeric material, selectively irradiating portions of the web with electromagnetic radiation, and stretching the web to form a stretched sheet having a plurality of voids, said stretched sheet having a plurality of indentations in at least one surface thereof, the indentations comprising areas of increased translucency corresponding to the irradiated portions of the web in which the number of voids is reduced, the areas of increased translucency forming a watermark that is visible by transmitted light.

Furthermore the present invention provides a watermarked polymeric sheet according to claim 19.

The watermarked polymeric sheet has a plurality of indentations in areas corresponding to the irradiated portions of the web. The indentations comprise the areas of increased translucency that form the watermark.

We have found that watermarks produced according to the present invention are distinct and well defined. The pattern may have any repeat length and can be simple or complex. Different watermarks can be generated very easily without having to alter or reconfigure the apparatus, simply by controlling the light source. The watermark may be adapted readily to include logos, pictures, text and variable information such as identification codes, dates and serial numbers.

The polymeric material may include at least one polyolefin, which is preferably polyethylene.

A plurality of voids are formed in the stretched sheet. The polymeric material may include a voiding agent to help promote the formation of voids.

Advantageously, at least two polymeric materials are co-extruded to form a multi-layer web having a base layer and at least one outer layer. The polymeric materials may include a first material containing a voiding agent that forms the base layer and a second material containing substantially no voiding agent that forms the outer layer.

The energy of the radiation incident on the irradiated portions of the web radiation may be in the range 0.04 - 4 J/mm², preferably 0.1-1.6 J/mm², more preferably 0.2 - 0.8 J/mm².

The irradiating radiation may be concentrated onto a spot on the web surface with an area in the range 0.05 - 5mm², preferably 0.1 - 2.5mm², more preferably 0.25 - 1mm². To achieve this spot size, the radiation may be focussed, or a narrow beam of radiation may be used, or a small light source may located in close proximity to the plane of the web. Preferably, the web is irradiated using a laser.

The incident radiation may be scanned and/or pulsed to create a pattern of irradiation on the surface of the web. The scanning and/or pulsing may be controlled, for example by a computer, to produce different patterns, images, logos or text.

Advantageously, the web is irradiated after it has been conditioned and before the stretching operation has been completed. By "conditioned" we mean an operation whereby the temperature of the web is stabilised and made uniform across its width. Preferably, the web is irradiated substantially at the start of the stretching operation.

Advantageously, the web is stretched by a ratio of between 1:2 and 1:10, preferably approximately 1:4. The web may be stretched biaxially, and preferably simultaneously.

The polymeric sheet is preferably a synthetic paper.

The surface of the polymeric sheet may be treated chemically and/or by corona discharge for improved print acceptance.

Advantageously, the polymeric material includes a copolymer of HDPE, a rosin derived voiding agent, polystyrene, HDPE homopolymer, calcium carbonate filler, titanium dioxide, styrene butadiene and calcium oxide.

According to another aspect of the invention there is provided a watermarked polymeric sheet, comprising a stretched sheet of a polymeric material having a plurality of voids, said polymeric sheet having a plurality of indentations in at least one surface thereof, the indentations comprising areas of increased translucency in which the number of voids is reduced, said areas forming a watermark that is visible by transmitted light.

The weight per unit area of the polymeric sheet may be reduced in the indentations. The indentations may have an average depth in the range 4 - 100µm, preferably 10 - 40pm.

The polymeric material may include at least one polyolefin, which is preferably polyethylene. The stretched sheet includes a plurality of voids and the polymeric material may include a voiding agent. The number of voids is reduced in the indentations.

Preferably, the stretched sheet has multiple co-extruded layers, including a base layer and at least one co-extruded outer layer. Advantageously, the base layer includes a plurality of voids and at least one co-extruded outer layer includes substantially no voids.

The sheet is preferably biaxially oriented. The polymeric sheet may be a synthetic paper. Advantageously, the surface of the polymeric sheet includes a coating and/or is treated chemically and/or by corona discharge.

The polymeric sheet is suitably a synthetic paper that comprises at least one printable surface layer and a base layer (which can also be termed the core layer if there is more than one surface layer e.g. one on either side of the base layer). The synthetic paper may be formed either:
A. by single extrusion of a single composition in which the surfaces and the core portion of the single extrudate represent the surface and base layers respectively, or
B. by co-extrusion of the composite from two or more compositions where the relatively thicker of the two layers forms the base layer and the relatively thinner of the two layers represents the surface layer, or
C. by lamination of a plurality of layers whereby at least one of the outermost layers represents the surface layers and the layer(s) below said surface layer or in between the two outer surface layers represents the base layer, or
D. by applying a coating of a printable layer on the surface layer of a sheet produced by any of the methods (A) to (C) above.

Sheet produced by co-extrusion and having the coating of a printable layer on the surface thereof is preferred. Methods of lamination and co-extrusion are well known in the art. Descriptions of formulations comprising a polyolefin and methods for producing synthetic papers based on polyolefins can be found in GB-A-1470372, GB-A-1492771 and GB-A-1490512. Further, a description of particularly advantageous coatings can be found in GB-A-2177413. The disclosures of all the aforementioned specifications are included herein by reference.

A voiding agent can be used both in the surface layer and in the base layer but is particularly effective in the base layer.

Fillers may be used in films/sheets such as synthetic paper intended for printing to provide an appropriate opaque white surface. These fillers are usually selected from inert minerals such as chalk, silica or clay. In addition, minor additives may be used to render the film/sheet anti-static and/or to lower its density.

It is well recognised that polyolefin films have low surface energies and this generally means that printing is difficult because the ink does not readily wet the surface and the dried ink does not adhere sufficiently to the surface thereof. In order to overcome these problems, the surface ofpolyolefin films/sheet may be subjected to various treatments such as e.g. a corona discharge treatment. Such treatments improve ink laydown and adhesion sufficiently to provide a useful material. The material so treated may, in some cases, lack absorption and require specialised printing techniques.

The lack of absorption of films/sheets such as synthetic paper can be overcome by applying a coating comprising a major amount of a absorbent filler and a minor amount of an adhesive binder. The coating can be incorporated during the manufacturing process. Such a method yields a product that is receptive to print and such products have gained wide commercial acceptance. Where such coatings are inconvenient and expensive to apply and require a separate manufacturing process, or render the surface so treated susceptible to the adverse effects of water and solvents, a higher amount of a filler such as silica can be employed.

The base layer in the film or sheet of the synthetic paper may also include other components such as pigments, other fillers, rubbers and the like. Thus, the base layer may be of any composition such as are described in GB-A-1470372 and GB-A-1492771. In a preferred embodiment, the composition of the base layer is as follows:

| Component | Parts by weight |
|---|---|
| High density polyethylene (copolymer) | 100 |
| Calcium-zinc resinate | 5-15 |
| Polystyrene | 4.5-5.5 |
| High density polyethylene (homopolymer) | 17.5-21 |
| Calcium carbonate filler | 15-25 |
| Titanium dioxide | 5-10 |
| Styrene-butadiene copolymer | 0-1.0 |
| Calcium oxide | 0.4-1.0 |

Embodiments of the invention will now be described by way of example, with reference to the accompanying drawings, in which:
Figure 1 is a schematic sectional side view of an apparatus for manufacturing a watermarked product;
Figure 2 is a schematic plan view of a web passing through a stretching machine in the apparatus shown in Figure 1;
Figure 3 is an image of a first watermarked product, viewed by transmitted light;
Figures 4 and 5 are magnified images of the first watermarked product, viewed by reflected and transmitted light respectively;
Figure 6 is a graphical representation of the profile of the first watermark pattern;
Figure 7 is an image of a second watermarked product, viewed by transmitted light;
Figures 8 and 9 are magnified images of the second watermarked product, viewed by reflected and transmitted light respectively;
Figure 10 is a plan view showing part of a modified apparatus for manufacturing a watermarked product, and
Figure 11 is a magnified image of a third watermarked product, viewed by transmitted light.

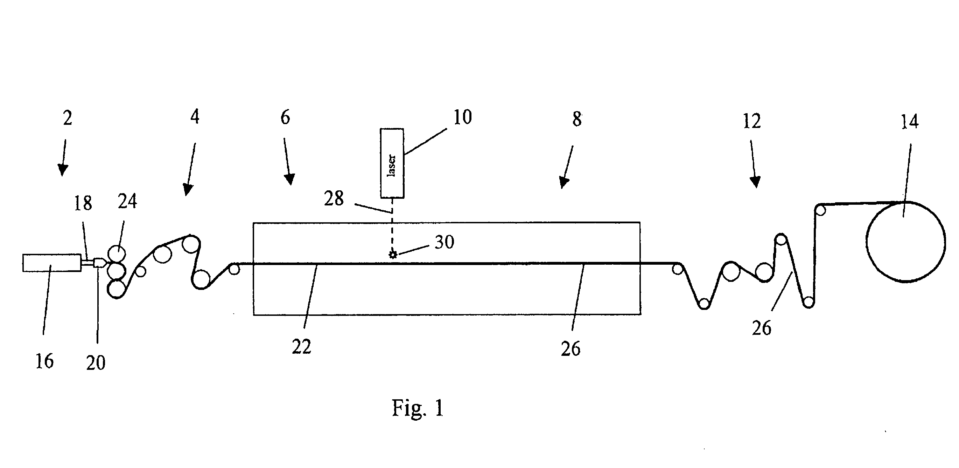

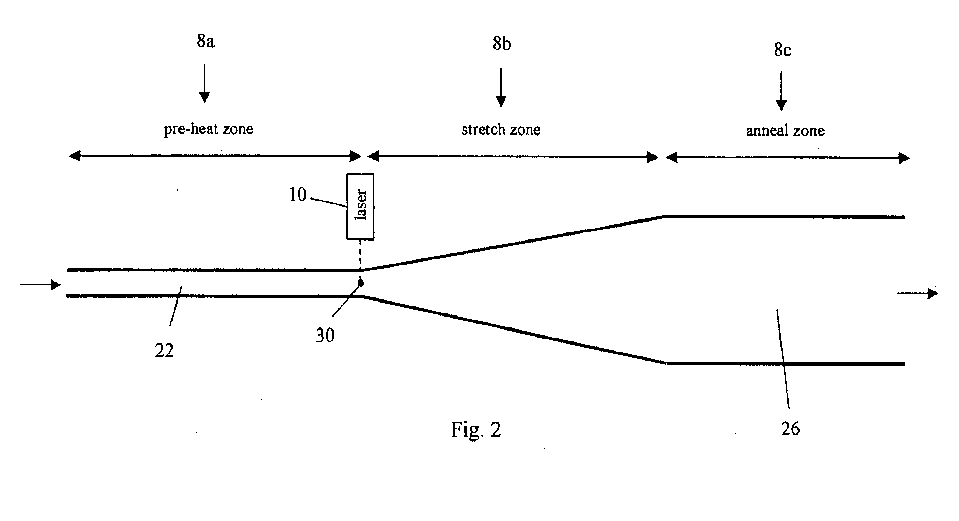

An apparatus for making watermarked synthetic paper is shown in figures 1 and 2. The apparatus includes an extrusion apparatus 2, a first set of conditioning rollers 4, a simultaneous biaxial stretching machine 6 that is mounted in an oven 8, a light source 10, a second set of conditioning rollers 12 and a take up reel 14.

The extrusion apparatus 2 may for example be a conventional three-layer co-extrusion apparatus comprising first and second extruders (only the first extruder 16 being shown), a distributor 18 and a sheeting die 20. The co-extrusion apparatus enables a three-layer co-extruded polymeric extrudate comprising a core layer and two surface layers to be produced continuously.

The first conditioning rollers 4 are mounted immediately downstream of the extrusion die 20. The polymeric material is extruded into the nip between a first pair of cooled rollers 24, which cool and solidify the extrudate 22 to form a web 22. The web 22 then passes around the other conditioning rollers 4, which condition the web prior to delivering it to the stretching machine 6, to ensure that the temperature of the web is stable and uniform across its width.

The stretching machine 6 stretches the conditioned web biaxially: i.e. in the longitudinal or machine direction (MD) and the transverse direction (TD). The web 22 is thus converted into a stretched sheet 26. The stretching machine 6, which is not shown in detail, may be of a conventional type, for example as described in GB 1442113, the content of which is incorporated by reference herein. Briefly, the stretching machine 6 includes two endless articulated chains that are driven along predetermined paths, the links of the chains being caused to expand and contract as the chains rotate. A series of gripping devices attached to the chain links successively engage the edges of the web 22 as it enters the stretching machine 6 and move apart from one another in the longitudinal and transverse directions as the web advances, thereby stretching the web 22 simultaneously in both directions. After completing the stretching operation, the gripping devices release the stretched sheet 26 and rotate back to the start of the stretching machine. The stretching machine 6 is mounted in a circulating air oven 8, which is used to control the temperature of the web throughout the stretching process.

The stretching operation consists of three distinct stages, the oven 8 being divided into three zones to maintain the web 22 and the stretched sheet 26 at the correct temperatures during each of those stages. In the first stage, the clamped web 22 is heated to the correct temperature for stretching in the first (pre-heat) zone 8a of the oven. The web 22 is not stretched during this first stage but it is clamped by the gripping devices to maintain it in a flat condition. The pre-heated web 22 is then stretched as it passes through the second (stretch) zone 8b of the oven, which controls the temperature of the web during the stretching operation. Finally, in the third stage of the stretching operation, the stretched sheet 26 is annealed by being held in the stretched condition as it passes through the third (annealing) zone 8c of the oven, before being released by the gripping devices.

Downstream of the stretching machine 6, the second set of conditioning rollers 12 is provided to condition the stretched sheet 26 as it emerges from the oven 8. The conditioned sheet is then wound onto the take-up reel 14. Optionally, the apparatus may include an air blower for cooling the sheet and edge trimmers for removing waste material from the side edges of the sheet. A corona discharge machine may also be provided for treating the surface of the sheet 26 to make it more receptive to print.

A light source 10 is mounted above the stretching machine 6 and arranged to direct a beam of radiation 28 through a window in the oven 8 onto the web 22. The beam of radiation 28 is focussed onto a spot 30 on the surface of the web 22 approximately at the point where stretching of the web commences: i.e. at the transition from the pre-heat zone 8a to the stretching zone 8b of the oven. The light source 10 is preferably a medium or high power laser, for example a CO₂ laser with an output power of 50W to 2kW.

In use, a polymeric substance, for example polyethylene or polypropylene, is extruded through the die 20 to form a layer of extrudate, typically with a width of about 400mm and a thickness of 5mm. The extrudate may have a layered composition, consisting of a base layer and two co-extruded outer layers. In a preferred embodiment, the base layer and the outer layers are both made primarily of polyethylene, the base layer (but not the outer layers) also including a voiding agent.

Immediately after leaving the extrusion die, the extrudate passes between the cooled rollers 24, which cool and solidify the extrudate to form the web 22, which typically has a thickness of about 1.5mm. In the case of a layered web, the base layer typically a thickness of 1.32mm and the two outer layers are each about 0.9mm thick. The web 22 then passes around the other conditioning rollers 4 to prepare it for stretching.

The conditioned web 22 is delivered to the stretching machine 6, where it is stretched as described above to form a stretched sheet 26. The stretching ratios in the longitudinal and transverse directions may be different but usually they are similar. Generally, the dimensions of the web are increased in both directions by a ratio of between 1:2 and 1:10, a ratio of 1:4 being typical. The overall thickness of the sheet is at the same time reduced, typically to approximately 100µm. The stretching operation produces biaxial orientation of the polymer molecules and causes microscopic voids to be formed in the base layer of the sheet. This reduces the density of the sheet and increases its rigidity, making it suitable for use as a synthetic paper.

The laser 10 is mounted to irradiate the web approximately at the point where the stretching process begins: i.e. at the transition between the first and second zones of the oven. The surface of the web is heated by the laser beam, producing a small localised increase in temperature (for example of about 2°C). This results in differential stretching of the web, the slightly warmer irradiated regions stretching more readily than the remainder of the web.

After the leaving the stretching machine, the stretched sheet passes around the second set of conditioning rollers 12 and is then wound onto the take-up reel 14. Optionally, the sheet may be cooled by an air blower and waste material may be removed from the side edges of the sheet by edge trimmers. The surface of the sheet may be treated with a corona discharge machine.

The sheet may subsequently be coated to increase its ability to be printed. Many coating substances commonly used in the paper industry may be used, including aqueous coatings, latex-based coatings and in particular coatings of the type described in GB A-2177413, the content of which is incorporated by reference herein. It may then be printed. An adhesive coating such as a pressure-sensitive or heat-sensitive coating may alternatively or additionally be applied to one of the sheet surfaces, allowing it to be converted into self-adhesive labels or tags.

The finished sheet carries markings that are visible by transmitted light in regions of the sheet corresponding to the areas of the web that were irradiated by the laser prior to stretching. These markings consist of shallow indentations in the surface of the sheet. The amount of material per unit area is less in the indentations than in the rest of the sheet and, in addition, less voiding of the base layer is found in the indentations. We believe that these effects both result from the increased temperature caused by the incident radiation, which allows the web to stretch more readily. Both of these factors affect the translucency of the sheet, the translucency being greater in the irradiated regions where the sheet is thinner and has fewer voids. The process of irradiation followed by stretching therefore produces a watermark that is visible by transmitted light.

The laser may be pulsed or continuous and may be either fixed or moveable, allowing it to irradiate different parts of the web as the web passes through the stretching machine. Alternatively, scanning equipment may be provided to direct the laser beam onto different parts of the web.

By pulsing the laser it is possible to produce a watermark comprising a line of dots running along the length of the sheet, the distance between the dots being dependent on the pulse frequency of the laser and the line speed of the machine. If the point at which the laser beam hits the web is moved during operation, a different pattern may be produced: for example, by moving the point back and forth in the transverse direction an oscillating wave or snake-like pattern can be produced. A more complicated pattern or image can be produced by pulsing the laser beam and scanning it across the width of the sheet to build up a pattern or image, in a manner similar to that employed in a laser printer. The scanning equipment can be digitally controlled, for example by a computer, allowing a variety of images to be generated and/or allowing variable information such as a serial number or date to be incorporated into the watermark.

Examples of some watermarked products and the processes used to make those products are provided below.

### Example 1

The following composition was used to produce Compound A (used in the production of the base material):

| **Component** | **Parts by Wt** |
|---|---|
| Rigidex TM 002/55 HDPE copolymer (MFI 0.2g/10 min & density 0.955 Kg/m³, ex BP Chemicals Ltd) | 100 |
| Rigidex TM HD6070EA HDPE (MFI 7.5g/10 min & density 0.96 Kg/m³, ex BP Chemicals Ltd) | 17.6 |
| Polystyrene Grade HF888 (ex BP Chemicals Ltd) | 4.8 |
| DERTOLINE TM MP 170 | 6.0 |
| Cariflex TM TR1102 Styrene-butadiene-styrene copolymer (ex Shell UK Ltd) | 0.6 |
| Anhyd.CaCO3 (2,5 µ particle size, OMYA ex Craxton & Garry) | 21.0 |
| TiO2 (Rutile) RCR2 (ex Tioxide) | 5.8 |
| Armostat TM 400 (antistat, ex Akzo Chemicals Ltd) | 0.14 |
| Armostat TM 375D (antistat, ex Akzo Chemicals Ltd) | 0.35 |
| Caloxal TM CPA (CaO, ex Sturge Lifford Ltd) | 0.58 |
| Calcium Stearate (ex RTZ Chemicals Ltd) | 0.04 |
| Irganox TM 8215 (antiox., ex Ciba-Geigy Ind Ltd) | 0.29 |
| HDPE = High density polyethylene MFI = Melt flow index | |

Compound A was prepared from the above components as follows:

Separate, melt blended, cooled and diced masterbatches (A1 and B) were obtained from the above with the calcium carbonate and titanium dioxide respectively and comprised:

| A1 | B |
|---|---|
| Calcium carbonate 60%w/w | Titanium dioxide 60%w/w |
| Rigidex TM HD6070EA 39.6% w/w | Rigidex TM HD6070EA 39.6% w/w |
| Armostat TM 400 0.4%w/w | Calcium Stearate 0.4%w/w |

Masterbatches A1 and B were then intermixed in appropriate proportions with the remainder of the ingredients of the composition and fed to a compounding extruder. The composition was melt blended at approximately 200°C, extruded, cooled and diced to form Compound A.

Compound A was fed to an in-line extruder of a twin extruder-distributor-sheeting die co-extrusion arrangement and Compound B was mixed at 20% with Rigidex TM HD 002/55 HDPE and fed to a secondary extruder. The sheeting die and distributor were of conventional type enabling a three-layer co-extrudate to be produced continuously comprising a layer of Compound B on each side of a layer of Compound A.

The extruders were arranged to enable each to form and feed a substantially homogeneous melt into the distributor, which was maintained at a temperature of 210°C. The die lips were adjusted to approximately 5mm and the flow of each of the melts was adjusted to give a composite layered extrudate about 395mm wide at an extrusion rate of 360 kg/hr.

The composite extrudate was then fed directly onto and around a set of cooling and conditioning rollers running at a peripheral speed whereby the core material was brought to a temperature of approximately 122°C and the outer layers each to a temperature of approximately 118°C. This resulted in a conditioned composite web having an overall thickness of 1.5mm, comprising a core thickness of 1.32mm and two outer layers each about 0.09mm thick.

The conditioned composite web was then fed into a simultaneous biaxial stretching machine arranged to provide a 4 : 1 stretch in each of the longitudinal or machine direction (MD) and the transverse direction (TD).

The stretching apparatus was provided with a three zone circulating air oven, the zones comprising preheat Zone 1, stretching Zone 2 and annealing Zone 3. The temperatures and lengths of the respective zones and the sheet speed are tabulated below:

| Zones | Temperature (°C) | Length (metres) | Speed in (metres/min) | Speed out (metres/min) |
|---|---|---|---|---|
| Zone 1 | 120 | 1 | 10.4 | - |
| Zone 2 | 120 | 1.5 | - | 43.8 |
| Zone 3 | 140 | 2 | - | 43.8 |

The web gripping devices were initially at a pitch of about 38mm and were heated to approximately 100°C prior to contacting the web.

The web was irradiated with a 50W CO₂ laser, arranged perpendicular to the web and focussed to produce a spot with a diameter of 0.8mm on the surface of the web, approximately at the transition between the first and second zones of the oven (i.e. just prior to stretching). The laser was pulsed at a frequency of 160Hz, with an on time of 3.75ms and an off time of 2.5ms. Each pulse therefore had an energy of about 0.2J and produced an energy density on the surface of the web of about 0.4J/mm², which raised the temperature of the irradiated portion of the web by about 2°C.

The composite plastics sheet thus produced had an average thickness of 0.094mm and nominal substance of 75 gsm. This sheet was cooled, edge trimmed and then reeled.

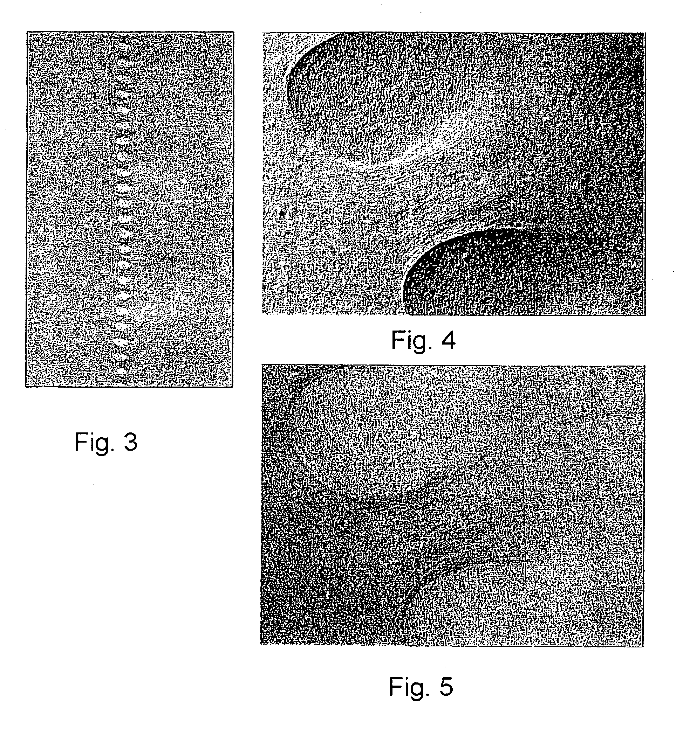

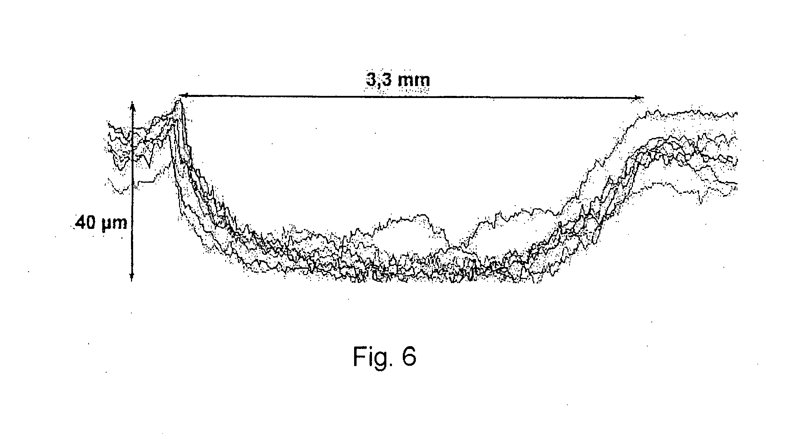

The watermark produced by the above method is shown in figures 3, 4 and 5. As can be seen in figure 3, the watermark consists of a line of dots running in the machine direction, the dots having a greater translucency than the surrounding areas of the sheet. Each dot consists of an oval indentation in the surface of the sheet, having a width of about 3.3mm and an average depth of about 24µm. The profiles of a number of the indentations are shown in figure 6: it can be seen that the profiles are of a fairly consistent width and depth. Magnified views of the indentations are provided in figures 4 (by reflected light) and 5 (by transmitted light).

### Example 2

A composite co-extruded sheet was made using the same process and with the same composition as in Example 1. In this case, however, the laser was pulsed at a frequency of 500Hz, with an on time of 1.6ms and an off time of 0.4ms. The angle of the laser was adjusted during operation, to cause lateral movement of the dot over the surface of the web (in the transverse direction).

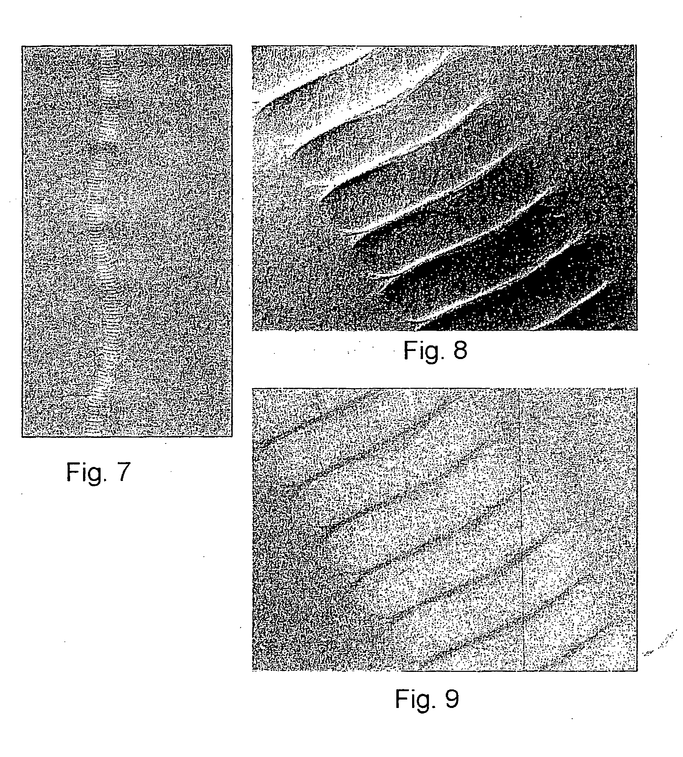

The watermark produced by this process is shown in figures 7, 8 and 9. As can be seen in figure 7, the watermark consists of a wavy line of dots running in the machine direction. The dots are closer together than in Example 1 and consist of elongate indentations in the surface of the web, having a width of about 3mm and an average depth of about 18µm. Magnified views of the indentations are provided in figures 8 (by reflected light) and 9 (by transmitted light).

### Example 3

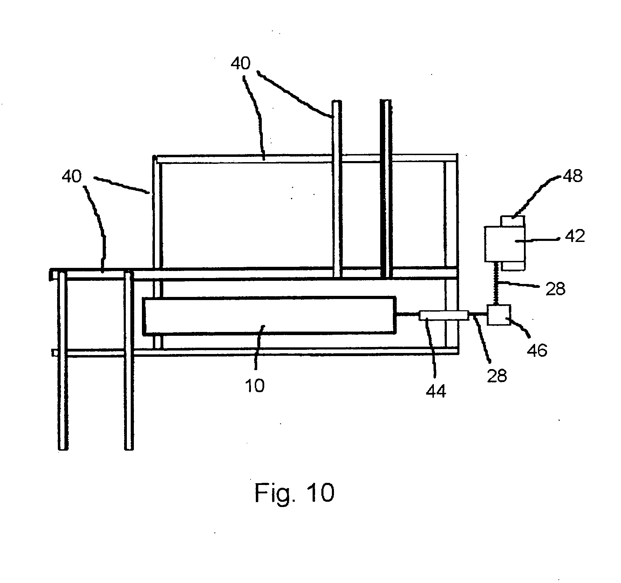

A composite co-extruded sheet was made using the same process and with the same composition as in Example 1. In this case, however, the laser 10 was mounted on a frame 40 above the oven and the laser beam 28 was directed onto the web using a scanner unit 42. The layout of the optical components was as shown in figure 10.

The laser 10 was mounted so that the laser beam 28 emerged in a direction parallel to the longitudinal axis of the oven. The beam was passed through a beam expander 44 and then reflected through 90° by a mirror 46 into the scanner unit 42, which was mounted above an access window 48 in the top wall of the oven. The scanner unit 42 was arranged to scan the laser beam in a transverse direction: i.e. perpendicular to the direction of travel of the web through the oven. The arrangement allowed for beam control, scanning and focussing of the beam onto the moving web. The beam expander 44 was adjusted to provide a spot size of 0.3-0.4mm diameter on the surface of the web. Other features of the apparatus were as follows:
- Laser:: Rofin SC x30 CO₂ laser
- Wavelength:: 10.6 µm
- Power:: 10-300W (attenuated to ~80% of the output power at the workpiece)
- Pulse length:: 5-400 µs
- Peak power:: 220-750W
- Repeat rate:: 0-62.5 kHz
- Scanner:: GSI Lumonics

The image definition was controlled by changing the laser repetition rate, pulse width, scanned width and laser spot size. These parameters were found to change the image size and opacity with variations in laser pulse overlap and pulse power density adjusted to optimise the marking process.

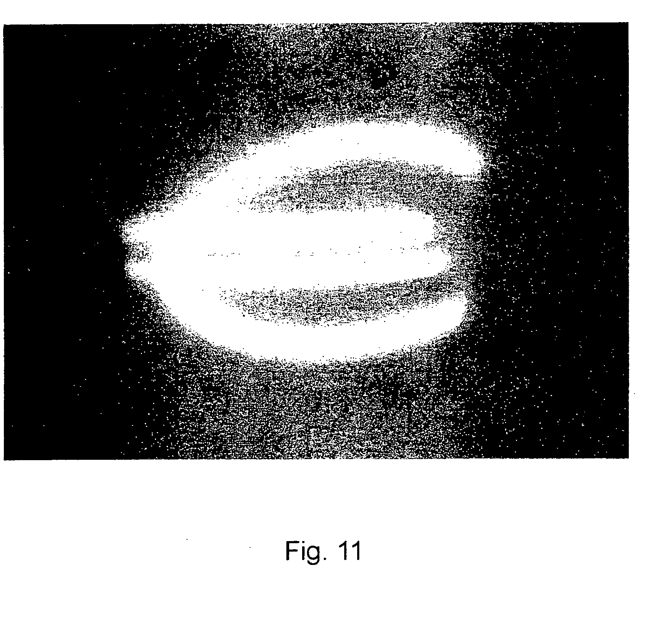

The laser was used to produce patterned "watermarks" in the shape of the Euro symbol €, with a maximum repetition rate of 62.5kHz and minimum pulse length of 5µsec. These were the typical conditions used, with the "watermarking" quality determined by viewing the web opacity using a light source behind the moving web on the production line. An example of a laser watermark seen by transmitted light is shown in figure 11.

Although the exact mechanism ofthe process that creates watermarks is not entirely certain at present, we believe that the slight increase in the temperature of the web surface produced by the incident radiation increases the elasticity of the web, allowing the irradiated portions to stretch more readily than the remainder of the web. This produces a slight decrease in the thickness and the amount of material in the irradiated regions of the sheet, resulting in an increased translucency. The increased elasticity also appears to cause reduced voiding in the irradiated portions of the sheet, which contributes to the increased translucency of the sheet in the affected regions.

The exact point of irradiation is not critical and may be slightly ahead of or behind the point where stretching commences, providing that it is not so far ahead that any heating of the surface of the web produced by the incident radiation has been dissipated prior to the commencement of the stretching, or so far behind that the stretching operation has already been substantially completed. Ideally, the irradiation point should be as close as possible to the start of the stretching operation.

The laser may be continuous or pulsed and scanning apparatus may be provided to move the point at which the radiation strikes the web, in the transverse and/or longitudinal directions. Pulsing and/or scanning of the laser may be controlled, for example by a computer, to create watermarks containing images, logos or text or variable data. Different light sources may be used, providing they are sufficiently powerful to heat the surface of the web reasonably quickly and can be focussed onto a sufficiently small spot to provide good definition. The radiation may be of visible or infrared wavelengths.

The web may be stretched biaxially or in only one direction. In the case of biaxial stretching, this is preferably simultaneous, although sequential stretching operations are also possible. In this latter case, the web may be irradiated before either or both of the separate stretching operations.

## Claims

1. A method of making a watermarked polymeric sheet, the method including forming a web of a polymeric material, selectively irradiating portions of the web with electromagnetic radiation, and stretching the web to form a stretched sheet having a plurality of voids, said stretched sheet having a plurality of indentations in at least one surface thereof, the indentations comprising areas of increased translucency corresponding to the irradiated portions of the web in which the number of voids is reduced, the areas of increased translucency forming a watermark that is visible by transmitted light.

2. A method according to claim 1, in which the polymeric material includes at least one polyolefin.

3. A method according to claim 2, in which the polymeric material includes polyethylene.

4. A method according to any one of claims 1 to 3, in which the polymeric material includes a voiding agent.

5. A method according to any one of the preceding claims, in which at least two polymeric materials are co-extruded to form a multi-layer web having a base layer and at least one co-extruded outer layer.

6. A method according to claim 5, in which the polymeric materials include a first material containing a voiding agent that forms the base layer and a second material that includes substantially no voiding agent that forms an outer layer.

7. A method according to any one of the preceding claims, in which the energy of the radiation incident on the irradiated portions of the web is in the range 0.04 - 4 J/mm², preferably 0.1 - 1.6 J/mm², more preferably 0.2 - 0.8 J/mm².

8. A method according to any one of the preceding claims, in which the irradiating radiation is concentrated onto a spot on the web surface with an area in the range 0.05 - 5mm², preferably 0.1 - 2.5mm², more preferably 0.25 - 1mm².

9. A method according to any one of the preceding claims, in which the web is irradiated using a laser.

10. A method according to any one of the preceding claims, in which the incident radiation is scanned and/or pulsed to create a pattern of irradiation on the surface of the web.

11. A method according to any one of the preceding claims, in which the web is irradiated after it has been conditioned and before the stretching operation has been completed.

12. A method according to claim 11, in which the web is irradiated substantially at the start of the stretching operation.

13. A method according to any one of the preceding claims, in which the web is stretched by a ratio of between 1:2 and 1:10, preferably approximately 1:4.

14. A method according to any one of the preceding claims, in which the web is stretched biaxially.

15. A method according to any one of the preceding claims, in which the web is simultaneously stretched biaxially.

16. A method according to any one of the preceding claims, in which the polymeric sheet is a synthetic paper.

17. A method according to any one of the preceding claims, in which the surface of the polymeric sheet is treated chemically and/or by corona discharge.

18. A method according to any one of the preceding claims, wherein the polymeric material includes a copolymer of HDPE, a rosin derived voiding agent, polystyrene, HDPE homopolymer, calcium carbonate filler, titanium dioxide, styrene butadiene and calcium oxide.

19. A watermarked polymeric sheet, comprising a stretched sheet of a polymeric material having a plurality of voids, said polymeric sheet having a plurality of indentations in at least one surface thereof, the indentations comprising areas of increased translucency in which the number of voids is reduced, said areas forming a watermark that is visible by transmitted light.

20. A sheet according to claim 19, in which the weight per unit area of the polymeric sheet is reduced in the indentations.

21. A sheet according to claim 19 or claim 20, in which the indentations have an average depth in the range 4 - 100µm, preferably 10 - 40µm.

22. A sheet according to any one of claims 19 to 21, in which the polymeric material includes at least one polyolefin.

23. A sheet according to claim 22, in which the polymeric material includes polyethylene.

24. A sheet according to any one of claims 19 to 23, in which the polymeric material includes a voiding agent.

25. A sheet according to any one of claims 19 to 24, in which stretched sheet has multiple co-extruded layers, including a base layer and at least one co-extruded outer layer.

26. A sheet according to claim 25, in which the base layer includes a plurality of voids and at least one co-extruded outer layer includes substantially no voids.

27. A sheet according to any one of claims 19 to 26, in which the sheet is biaxially oriented.

28. A sheet according to any one of claims 19 to 27, in which the polymeric sheet is a synthetic paper.

29. A sheet according to any one of claims 19 to 28, in which the surface of the polymeric sheet includes a coating and/or is treated chemically and/or by corona discharge.

30. A sheet according to any one of claims 19 to 29, wherein the polymeric material includes a copolymer of HDPE, a rosin derived voiding agent, polystyrene, HDPE homopolymer, calcium carbonate filler, titanium dioxide, styrene butadiene and calcium oxide.

## Patentansprüche

1. Verfahren zum Herstellen einer Kunststofffolie mit Wasserzeichen, wobei das Verfahren das Bilden einer Bahn aus einem Kunststoff, selektives Bestrahlen von Teilen der Bahn mit elektromagnetischer Strahlung und Dehnen der Bahn zum Bilden einer gedehnten Folie mit einer Vielzahl von Poren beinhaltet, wobei die gedehnte Folie in wenigstens einer Oberfläche davon eine Vielzahl von Vertiefungen hat, wobei die Vertiefungen Bereiche höherer Lichtdurchlässigkeit umfassen, die den bestrahlten Teilen der Bahn entsprechen, in welchen die Porenzahl reduziert ist, wobei die Bereiche höherer Lichtdurchlässigkeit ein Wasserzeichen bilden, das mittels Durchlicht sichtbar ist.

2. Verfahren nach Anspruch 1, wobei der Kunststoff wenigstens ein Polyolefin beinhaltet.

3. Verfahren nach Anspruch 2, wobei der Kunststoff Polyethylen beinhaltet.

4. Verfahren nach einem der Ansprüche 1 bis 3, wobei der Kunststoff ein Porenbildungsmittel beinhaltet.

5. Verfahren nach einem der vorhergehenden Ansprüche, wobei wenigstens zwei Kunststoffe coextrudiert werden, um eine mehrschichtige Bahn mit einer Grundschicht und wenigstens einer coextrudierten äußeren Schicht zu bilden.

6. Verfahren nach Anspruch 5, wobei die Kunststoffe ein die Grundschicht bildendes erstes Material, das ein Porenbildungsmittel enthält, und ein eine äußere Schicht bildendes zweites Material, das im Wesentlichen kein Porenbildungsmittel beinhaltet, beinhalten.

7. Verfahren nach einem der vorhergehenden Ansprüche, wobei die Energie der auf die bestrahlten Teile der Bahn fallenden Strahlung im Bereich von 0,04 - 4 J/mm², vorzugsweise 0,1 - 1,6 J/mm², mehr vorzugsweise 0,2 - 0,8 J/mm² ist.

8. Verfahren nach einem der vorhergehenden Ansprüche, wobei die bestrahlende Strahlung auf einen Punkt auf der Bahnoberfläche mit einem Flächeninhalt von 0,05 - 5 mm², vorzugsweise 0,1 - 2,5 mm², mehr vorzugsweise 0,25 - 1 mm², konzentriert wird.

9. Verfahren nach einem der vorhergehenden Ansprüche, wobei die Bahn mit einem Laser bestrahlt wird.

10. Verfahren nach einem der vorhergehenden Ansprüche, wobei die einfallende Strahlung gescannt und/oder gepulst wird, um auf der Oberfläche der Bahn ein Bestrahlungsmuster zu erzeugen.

11. Verfahren nach einem der vorhergehenden Ansprüche, wobei die Bahn bestrahlt wird, nachdem sie konditioniert wurde und bevor der Dehnvorgang abgeschlossen wird.

12. Verfahren nach Anspruch 11, wobei die Bahn im Wesentlichen zu Beginn des Dehnvorgangs bestrahlt wird.

13. Verfahren nach einem der vorhergehenden Ansprüche, wobei die Bahn um ein Verhältnis zwischen 1:2 und 1:10, vorzugsweise von etwa 1:4 gedehnt wird.

14. Verfahren nach einem der vorhergehenden Ansprüche, wobei die Bahn biaxial gedehnt wird.

15. Verfahren nach einem der vorhergehenden Ansprüche, wobei die Bahn gleichzeitig biaxial gedehnt wird.

16. Verfahren nach einem der vorhergehenden Ansprüche, wobei die Kunststofffolie ein synthetisches Papier ist.

17. Verfahren nach einem der vorhergehenden Ansprüche, wobei die Oberfläche der Kunststofffolie chemisch und/oder mit Koronaentladung behandelt wird.

18. Verfahren nach einem der vorhergehenden Ansprüche, wobei der Kunststoff ein Copolymer von HDPE, ein von Terpentinharz abgeleitetes Porenbildungsmittel, Polystyrol, HDPE-Homopolymer, Calciumcarbonatfüllstoff, Titandioxid, Styrol-Butadien und Calciumoxid beinhaltet.

19. Kunststofffolie mit Wasserzeichen, umfassend eine gedehnte Folie aus einem Kunststoff mit einer Vielzahl von Poren, wobei die genannte Kunststofffolie in wenigstens einer Oberfläche davon eine Vielzahl von Vertiefungen hat, wobei die Vertiefungen Bereiche höherer Lichtdurchlässigkeit umfassen, in welchen die Porenzahl reduziert ist, wobei die genannten Bereiche ein Wasserzeichen bilden, das mittels Durchlicht sichtbar ist.

20. Folie nach Anspruch 19, wobei das Gewicht pro Flächeneinheit der Kunststofffolie in den Vertiefungen reduziert ist.

21. Folie nach Anspruch 19 oder Anspruch 20, wobei die Vertiefungen eine durchschnittliche Tiefe im Bereich von 4 - 100 µm, vorzugsweise 10 - 40 µm haben.

22. Folie nach einem der Ansprüche 19 bis 21, wobei der Kunststoff wenigstens ein Polyolefin beinhaltet.

23. Folie nach Anspruch 22, wobei der Kunststoff Polyethylen beinhaltet.

24. Folie nach einem der Ansprüche 19 bis 23, wobei der Kunststoff ein Porenbildungsmittel beinhaltet.

25. Folie nach einem der Ansprüche 19 bis 24, wobei die gedehnte Folie mehrere coextrudierte Schichten einschließlich einer Grundschicht und wenigstens einer coextrudierten äußeren Schicht beinhaltet.

26. Folie nach Anspruch 25, wobei die Grundschicht eine Vielzahl von Poren beinhaltet und wenigstens eine coextrudierte äußere Schicht im Wesentlichen keine Poren beinhaltet.

27. Folie nach einem der Ansprüche 19 bis 26, wobei die Folie biaxial orientiert ist.

28. Folie nach einem der Ansprüche 19 bis 27, wobei die Kunststofffolie ein synthetisches Papier ist.

29. Folie nach einem der Ansprüche 19 bis 28, wobei die Oberfläche der Kunststofffolie eine Beschichtung aufweist und/oder chemisch und/oder mit Koronaentladung behandelt ist.

30. Folie nach einem der Ansprüche 19 bis 29, wobei der Kunststoff ein Copolymer von HDPE, ein von Terpentinharz abgeleitetes Porenbildungsmittel, Polystyrol, HDPE-Homopolymer, Calciumcarbonatfüllstoff, Titandioxid, Styrol-Butadien und Calciumoxid beinhaltet.

## Revendications

1. Procédé de fabrication d'une feuille polymère filigranée, le procédé incluant la formation d'une toile d'un matériau polymère, l'irradiation sélective de parties de la toile avec un rayonnement électromagnétique, et l'étirement de la toile pour former une feuille étirée ayant une pluralité de vides, ladite feuille étirée ayant une pluralité d'échancrures dans au moins une surface de celle-ci, les échancrures comprenant des zones de translucidité accrue correspondant aux parties irradiées de la toile dans lesquelles le nombre de vides est réduit, les zones de translucidité accrue formant un filigrane qui est visible par la lumière transmise.

2. Procédé selon la revendication 1, dans lequel le matériau polymère inclut au moins une polyoléfine.

3. Procédé selon la revendication 2, dans lequel le matériau polymère inclut du polyéthylène.

4. Procédé selon une quelconque des revendications 1 à 3, dans lequel le matériau polymère inclut un agent de formation de vides.

5. Procédé selon une quelconque des revendications précédentes, dans lequel au moins deux matériaux polymères sont co-extrudés pour former une toile à couches multiples ayant une couche de base et au moins une couche externe co-extrudée.

6. Procédé selon la revendication 5, dans lequel les matériaux polymères incluent un premier matériau contenant un agent de formation de vides qui forme la couche de base et un second matériau qui n'inclut substantiellement aucun agent de formation de vides qui forme une couche externe.

7. Procédé selon une quelconque des revendications précédentes, dans lequel l'énergie du rayonnement incident sur les parties irradiées de la toile est de l'ordre de 0,04 à 4 J/mm², de préférence de 0,1 à 1,6 J/mm², mieux encore de 0,2 à 0,8 J/mm²,

8. Procédé selon une quelconque des revendications précédentes, dans lequel le rayonnement irradiant est concentré sur un point sur la surface de la toile avec une superficie de l'ordre de 0,05 à 5 mm², de préférence de 0,1 à 2,5 mm², mieux encore de 0,25 à 1 mm².

9. Procédé selon une quelconque des revendications précédentes, dans lequel la toile est irradiée à l'aide d'un laser.

10. Procédé selon une quelconque des revendications précédentes, dans lequel le rayonnement incident est balayé et/ou pulsé pour créer un motif d'irradiation sur la surface de la toile.

11. Procédé selon une quelconque des revendications précédentes, dans lequel la toile est irradiée après avoir été conditionnée et avant que l'opération d'étirage ne soit terminée.

12. Procédé selon la revendication 11, dans lequel la toile est irradiée substantiellement au début de l'opération d'étirage.

13. Procédé selon une quelconque des revendications précédentes, dans lequel la toile est étirée dans un rapport compris entre 1:2 et 1:10, de préférence d'environ 1:4.

14. Procédé selon une quelconque des revendications précédentes, dans lequel la toile est étirée biaxialement.

15. Procédé selon une quelconque des revendications précédentes, dans lequel la toile est simultanément étirée biaxialement.

16. Procédé selon une quelconque des revendications précédentes, dans lequel la feuille polymère est un papier synthétique.

17. Procédé selon une quelconque des revendications précédentes, dans lequel la surface de la feuille polymère est traitée chimiquement et/ou par décharge corona.

18. Procédé selon une quelconque des revendications précédentes, où le matériau polymère inclut un copolymère de PEHD, un agent de formation de vides dérivé de la colophane, du polystyrène, de l'homopolymère de PEHD, une charge de carbonate de calcium, du dioxyde de titane, du styrène-butadiène et de l'oxyde de calcium.

19. Feuille polymère filigranée, comprenant une feuille étirée d'un matériau polymère ayant une pluralité de vides, ladite feuille polymère ayant une pluralité d'échancrures dans au moins une surface de celle-ci, les échancrures comprenant des zones de translucidité accrue dans lesquelles le nombre de vides est réduit, lesdites zones formant un filigrane qui est visible par la lumière transmise.

20. Feuille selon la revendication 19, dans laquelle le poids par unité de surface de la feuille polymère est réduit dans les échancrures.

21. Feuille selon la revendication 19 ou revendication 20, dans laquelle les échancrures ont une profondeur moyenne de l'ordre de 4 à 100 µm, de préférence de 10 à 40 µm.

22. Feuille selon une quelconque des revendications 19 à 21, dans laquelle le matériau polymère inclut au moins une polyoléfine.

23. Feuille selon la revendication 22, dans laquelle le matériau polymère inclut du polyéthylène.

24. Feuille selon une quelconque des revendications 19 à 23, dans laquelle le matériau polymère inclut un agent de formation de vides.

25. Feuille selon une quelconque des revendications 19 à 24, dans laquelle la feuille étirée a de multiples couches co-extrudées, y compris une couche de base et au moins une couche externe co-extrudée.

26. Feuille selon la revendication 25, dans laquelle la couche de base inclut une pluralité de vides et au moins une couche externe co-extrudée n'inclut substantiellement aucun vide.

27. Feuille selon une quelconque des revendications 19 à 26, dans laquelle la feuille est à orientation biaxiale.

28. Feuille selon une quelconque des revendications précédentes 19 à 27, dans laquelle la feuille polymère est un papier synthétique.

29. Feuille selon une quelconque des revendications 19 à 28, dans laquelle la surface de la feuille polymère inclut un revêtement et/ou est traitée chimiquement et/ou par décharge corona.

30. Feuille selon une quelconque des revendications 19 à 29, où le matériau polymère inclut un copolymère de PEHD, un agent de formation de vides dérivé de la colophane, du polystyrène, de l'homopolymère de PEHD, une charge de carbonate de calcium, du dioxyde de titane, du styrène-butadiène et de l'oxyde de calcium.
